# EUROPÄISCHE PATENTSCHRIFT

(11) **EP 2 604 491 B1**
(45) Veröffentlichungstag und Bekanntmachung des Hinweises auf die Patenterteilung: **01.08.2018**
(21) Anmeldenummer: 11009877.9
(22) Anmeldetag: 15.12.2011
(51) Int. Cl.: B62D 5/12, B62D 7/08

(54) **Beidseitig aktuierende Lenkanlage für Nutzfahrzeuge**
Steering assembly for commercial vehicles which can be actuated on both sides
Installation de direction d'actionnement des deux côtés pour véhicules utilitaires

(43) Veröffentlichungstag der Anmeldung: 19.06.2013
(73) Patentinhaber: Rheinmetall MAN Military Vehicles Österreich GesmbH, 1230 Wien (AT)
(72) Erfinder: Deimel, Michael, 3451 Plankenberg (AT); Pertlik, Rudolf, 1220 Wien (AT)
(74) Vertreter: Horn Kleimann Waitzhofer Patentanwälte PartG mbB

(56) Entgegenhaltungen:
- EP-A1- 1 559 635
- EP-A1- 2 338 763
- EP-A2- 0 291 844
- WO-A1-00/71408
- DE-A1- 19 755 278
- GB-A- 2 275 662

## Beschreibung

Die Erfindung beschäftigt sich mit der Realisierung einer Zweikreislenkung, für militärische Nutzfahrzeuge, mit einer lenkbaren Achse. Zur Übertragung hoher Lenkkräfte auf die Räder wird einem insbesondere konventionellen Lenkgetriebe ein Hilfselement zugeordnet, dem die Bewegung durch eine kinematische Koppelung mit dem Lenkgetriebe aufgezwungen wird, so dass durch das Hilfselement diese Bewegung zusätzlich auf das gegenüberliegende Rad übertragen wird. Vorgeschlagen wird eine beidseitig aktivierende Lenkanlage.

Lenkbare Achsen umfassen eine an einem Fahrzeugrahmen angebundene Starrachse, an welcher endseitig lenkbare Räder gelenkig gehaltert sind. Ein Lenkgetriebe und diverse Übertragungselemente übertragen die Lenkbewegung von einem Lenkrad auf die Räder (OE 100 58 628 B4). Eine Radlagerung für eine lenkbare Achse eines Fahrzeuges offenbart beispielsweise die DE 20 2004 021 236 U1. Eine Anlenkung und Lenkung einer angetriebenen oder nicht angetriebenen starren Hinterachse eines Nutzfahrzeuges ist der DE 296 08229 U1 entnehmbar. Mit einer Nutzfahrzeuglenkung beschäftigt sich auch die DE 20 2004 021 588 U1.

Die meisten Militärfahrzeuge besitzen Allradantrieb. Hier sind bei Nutzfahrzeugen neben der Antriebsformel 4x4 öfter auch die Antriebsformeln 6x6 bzw. 8x8 zu finden. Bei einem 4x4 Nutzfahrzeug weist dieses zwei Achsen auf, eine Vorderachse und eine Hinterachse. Die Lenkübertragung erfolgt nur auf die Vorderachse. Bei derartigen Nutzfahrzeugen treten hohe Lenkkräfte auf, die bei hohen Achslasten auftreten.

Hier stellt sich die Erfindung die Aufgabe, eine Lenkung aufzuzeigen, die die hohen Lenkkräfte auf die Räder übertragen kann.

Gelöst wird die Aufgabe durch die Merkmale des Patentanspruchs 1. Vorteilhafte Ausgestaltungen werden in den Unteransprüchen angegeben.

Der Erfindung liegt die Idee zugrunde, eine Zweikreislenkung einzubinden.

Ein hydraulisches Zweikreislenkungssystem beschreibt die EP 1 120 330 B1 (DE 600 00 284 T2). Dieses Lenksystem weist in einem ersten Kreis eine Steuereinheit und einen über Arbeitsanschlüsse mit dieser verbundenen ersten Lenkmotor auf, während der zweite Kreis mit einer zweiten Steuereinheit und diese mit einem zweiten Lenkmotor verbunden ist. Das Umschalten bzw. Zuschalten des jeweiligen Kreises erfolgt durch ein Umschaltventil.

Ein Lenkgetriebe für eine Hilfskraftlenkung mit zwei hydraulisch voneinander getrennten Lenkkreisen offenbaren unter anderem die DE 37 40 052 A1 als auch die DE 27 19 895 A1 und die DE 37 36 424 A1.

Eine Lenkachse mit einer hydrostatischen Zweikreislenkung für Nutzfahrzeuge ist der DE 197 55 278 A1 entnehmbar. Diese Lenkachse umfasst einen ersten doppelwirkenden Druckmittelzylinder, der im Bereich seiner Mitte mit einem Achsrückengehäuse und an seinen beiden Enden über Spurstangen mit Gelenkgehäusen verbunden ist. Ein zusätzlicher zweiter doppelt wirkender Druckmittelzylinder ist auf einer Seite der Achse angebracht. Dieser Druckmittelzylinder wirkt simultan mit dem ersten Druckmittelzylinder zusammen.

Die GB 2 275 662 A zeigt ein Fahrzeug, insbesondere ein Brandbekämpfungsfahrzeug, mit einer ersten angelenkten Achse und einer zweiten angelenkten Achse.

Die WO 00/71408 A1 beschreibt eine Zugmaschine, die eine Zweiachslenkung aufweist.

Die EP 0 291 844 A2 zeigt eine Kehrmaschine, die zwei angelenkte Achsen aufweist.

Anders die vorliegende Erfindung. Hier ist angedacht, zu einem konventionellen Lenkgetriebe ein Hilfselement mit aufzunehmen und neben dem (ersten) Lenkungskreis einen weiteren Lenkungskreis an der gleichen Achse zu schaffen. Die kinematische Koppelung zwischen Lenkrad und Radbewegung erfolgt dabei analog zu einem konventionellen Nutzfahrzeug. Ein Lenkgetriebe betätigt den Lenkhebel am Achsschenkel. Dem Hilfselement wird dabei aber die Bewegung durch eine weitere kinematische Koppelung aufgezwungen, so dass durch das Hilfselement die Bewegung zusätzlich auf das gegenüberliegende Rad weitergeleitet wird. Diese Weiterleitung dient zur Unterstützung der Lenkkraft. Damit wird der Lenkkomfort erhöht. Die vorgesehene Zweikreislenkung lässt auch eine Nachrüstung zu.

Damit eine Entkoppelung der Lastpfade erreicht wird, sieht die Erfindung vor, Lenkgetriebe und Hilfselement an gegenüberliegenden Fahrzeugseiten anzubauen. Das Hilfselement, ein hydraulischer Zylinder sowie Drehverstärker, werden daher an der dem Lenkgetriebe gegenüberliegenden Fahrzeugseite (in der Regel der Beifahrerseite) angebracht. Damit wird eine beidseitig aktuierende Lenkanlange bzw. Lenkvorrichtung für militärische Nutzfahrzeuge geschaffen.

Anhand eines Ausführungsbeispiels mit Zeichnung soll die Erfindung näher erläutert werden. Es zeigt:
- Fig. 1: eine skizzenhafte Darstellung der Einbindung eines Hilfselements zur Schaffung einer Zweikreislenkung,
- Fig. 2a, b: eine konstruktive Darstellung der Einbindung der Komponenten an einem Fahrzeug.

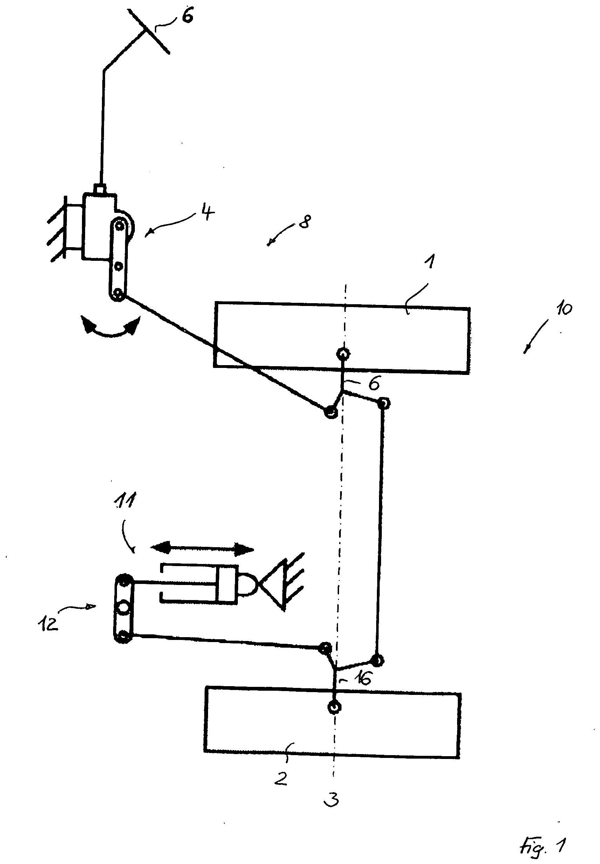

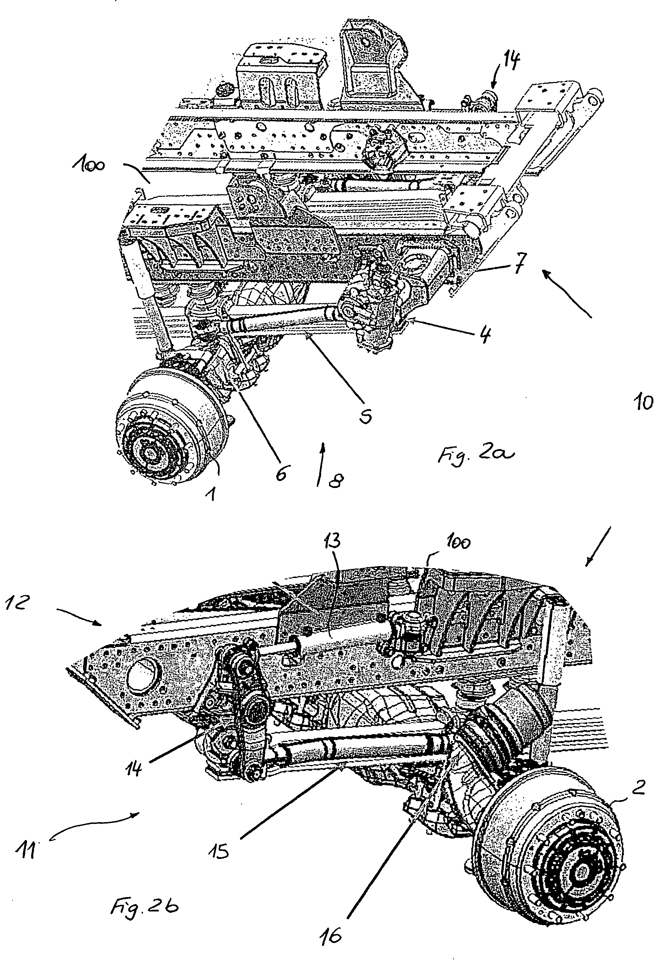

In Fig. 1 ist das Grundprinzip eines Lenkschemas nach der Erfindung dargestellt. Hierin angedeutet sind Räder 1, 2, die an einer (Vorder-) Achse 3 befestigt sind. Mit 4 ist ein vorzugsweise konventionelles Lenkgetriebe gekennzeichnet, das in bekannter Art und Weise auf die Verstellung des Rades 1 und damit der Räder 1, 2 bei Betätigung eines Lenkelementes 6, wie beispielsweise eines Lenkrades, einwirkt (Fig. 2a). Zusätzlich zu dem Lenkgetriebe 4 und einem damit vorhandenen ersten Lenkungskreis 8 wird ein Hilfselement 11 als einen weiteren Lenkungskreis 12 in das Lenkschema eingebunden, das die Verstellung des Rades 1 unterstützt. Das Lenkgetriebe 4 ist die Stelleinheit für beide Lenkungskreise 8 und 12.

Fig. 2a und Fig. 2b zeigen weitere Details der nunmehr geschaffenen Lenkvorrichtung 10.

In Fig. 2a dargestellt ist das konventionelle Lenkgetriebe 4 mit Lenkstockhebel Dieses Lenkgetriebe 4 wirkt in bekannter Art und Weise über eine Lenkschubstange 5 auf einen Lenkhebel 6 und kann so das Rad 1 nach rechts oder links bewegen - lenken -, beispielsweise das rechte Rad des hier leicht angedeuteten Fahrzeugs 100. Mit 7 ist ein Lenkungsbock gekennzeichnet. Diese Komponenten bilden den ersten Lenkungskreis 8.

Fig. 2b zeigt den zweiten Lenkungskreis 12, der durch das Einbinden des Hilfselementes 11 geschaffen wird. Das Hilfselement 11 wird durch einen Arbeitszylinder 13 gebildet, der über einen Schlepphebel 14 und eine Lenkschubstange 15 auf einen Lenkhebel 16 einwirkt, wodurch das Rad 2, also in diesem Fall das linke Rad, nach rechts oder links verstellt werden kann, unterstützend zum gegenüber an der Achse 3 befindlichen bzw. angebrachten - hier dem rechten - Rad 1.

Nur der Vollständigkeit halber sei erwähnt, dass eine nicht näher dargestellte Spurstange hinter der Achse 3 eingebunden ist. Auch kann das Lenkelement durch eine modernere Version (Joystick, etc.) gebildet werden.

## Patentansprüche

1. Militärisches Nutzfahrzeug (100) mit Allradantrieb und nur einer lenkbaren Achse (3) mit Rädern (1, 2), mit einer Lenkvorrichtung (10) mit einem Lenkungskreis (8), gebildet aus einem Lenkgetriebe (4), das über Übertragungsglieder (5, 6) bei Betätigung eines Lenkelementes (6) auf eines der Räder (1) einwirkt, wobei ein weiterer Lenkungskreis (12) durch Einbindung eines Hilfselementes (11) geschaffen wird, das auf das andere Rad (2) derart einwirkt, dass es die Radbewegung des ersten Lenkungskreises (8) unterstützt, wodurch eine beidseitig aktuierende Lenkvorrichtung (10) geschaffen wird.

2. Militärisches Nutzfahrzeug nach Anspruch 1, **dadurch gekennzeichnet, dass** die Übertragungsglieder (5, 6) eine Lenkschubstange (5) sowie ein Lenkhebel (16) sind.

3. Militärisches Nutzfahrzeug nach Anspruch 1 oder 2, **dadurch gekennzeichnet, dass** das Hilfselement (11) zumindest aus einem Arbeitszylinder (13) gebildet wird, der auf weitere Übertragungsglieder (14, 15, 16) einwirkt.

4. Militärisches Nutzfahrzeug nach Anspruch 3, **dadurch gekennzeichnet, dass** der Arbeitszylinder ein hydraulischer Zylinder ist.

5. Militärisches Nutzfahrzeug nach einem der Ansprüche 1 bis 4, **dadurch gekennzeichnet, dass** die Übertragungsglieder (14, 15, 16) ein Schlepphebel (14), eine Lenkschubstange (15) und ein Lenkhebel (16) sind.

6. Militärisches Nutzfahrzeug nach einem der Ansprüche 1 bis 5, **dadurch gekennzeichnet, dass** das Lenkgetriebe (4) eine Stelleinheit für den ersten und den zweiten Lenkungskreis (8, 12) ist.

7. Militärisches Nutzfahrzeug nach einem der Ansprüche 1 bis 6, **dadurch gekennzeichnet, dass** eine Spurstange hinter der lenkbaren Achse (3) eingebunden ist.

8. Militärisches Nutzfahrzeug nach einem der Ansprüche 1 bis 7, **dadurch gekennzeichnet, dass** das Hilfselement (11) an einer dem Lenkgetriebe (4) gegenüberliegenden Fahrzeugseite angebracht ist.

## Claims

1. Military utility vehicle (100) having all wheel drive and only one steerable axle (3) having wheels (1, 2), having a steering system (10) having a steering circuit (8) that is formed from a steering gear (4) that acts via transmission elements (5, 6) upon one of the wheels (1) when a steering element (6) is actuated, wherein a further steering circuit (12) is provided by means of integrating an auxiliary element (11) that acts upon the other wheel (2) in such a manner that said auxiliary element supports the wheel movement of the first steering circuit (8), as a result of which a steering system (10) is provided that actuates both sides.

2. Military utility vehicle according to claim 1, **characterised in that** the transmission elements (5, 6) are a steering push rod (5) and also a steering lever (16).

3. Military utility vehicle according to claim 1 or 2, **characterised in that** the auxiliary element (11) is formed from at least one working cylinder (13) that acts upon further transmission elements (14, 15, 16).

4. Military utility vehicle according to claim 3, **characterised in that** the working cylinder is a hydraulic cylinder.

5. Military utility vehicle according to any one of the claims 1 to 4, **characterised in that** the transmission elements (14, 15, 16) are a rocker arm (14), a steering push rod (15) and a steering lever (16).

6. Military utility vehicle according to any one of the claims 1 to 5, **characterised in that** the steering gear (4) is an adjusting unit for the first and the second steering circuit (8, 12).

7. Military utility vehicle according to any one of the claims 1 to 6, **characterised in that** a tie rod is integrated behind the steerable axle (3).

8. Military utility vehicle according to any one of the claims 1 to 7, **characterised in that** the auxiliary element (11) is attached to a vehicle side that lies opposite the steering gear (4).

## Revendications

1. Véhicule utilitaire militaire (100) avec traction par quatre roues motrices et un seul essieu dirigeable (3) avec des roues (1, 2), comportant un dispositif de direction (10) avec un circuit de direction (8), formé d'un boîtier de direction (4) qui agit sur une des roues (1) par le biais d'éléments de transfert (5, 6) lors de l'actionnement d'un élément de direction (6), dans lequel un autre circuit de direction (12) est créé par l'intégration d'un élément auxiliaire (11) qui agit sur l'autre roue (2) de manière à soutenir le mouvement des roues du premier circuit de direction (8), ce qui permet de créer un dispositif de direction (10) d'actionnement des deux côtés.

2. Véhicule utilitaire militaire selon la revendication 1, **caractérisé en ce que** les éléments de transfert (5, 6) sont une articulation de direction (5) et un bras de direction (16).

3. Véhicule utilitaire militaire selon la revendication 1 ou 2, **caractérisé en ce que** l'élément auxiliaire (11) est formé au moins d'un vérin de travail (13) qui agit sur d'autres éléments de transfert (14, 15, 16).

4. Véhicule utilitaire militaire selon la revendication 3, **caractérisé en ce que** le vérin de travail est un vérin hydraulique.

5. Véhicule utilitaire militaire selon une des revendications 1 à 4, **caractérisé en ce que** les éléments de transfert (14, 15, 16) sont un culbuteur (14), une articulation de direction (15) et un bras de direction (16).

6. Véhicule utilitaire militaire selon une des revendications 1 à 5, **caractérisé en ce que** le boîtier de direction (4) est une unité de réglage pour le premier et le second circuit de direction (8, 12).

7. Véhicule utilitaire militaire selon une des revendications 1 à 6, **caractérisé en ce qu'**une biellette de direction est intégrée derrière l'essieu dirigeable (3).

8. Véhicule utilitaire militaire selon une des revendications 1 à 7, **caractérisé en ce que** l'élément auxiliaire (11) est appliqué sur un côté du véhicule opposé au boîtier de direction (4).
